# EUROPÄISCHE PATENTSCHRIFT

(11) **EP 1 462 066 B1**
(45) Veröffentlichungstag und Bekanntmachung des Hinweises auf die Patenterteilung: **08.07.2009**
(21) Anmeldenummer: 04007048.4
(22) Anmeldetag: 24.03.2004
(51) Int. Cl.: A61C 8/00

(54) **Kieferimplantat mit abgewinkeltem Pfostenverlauf**
Dental implant with an angled abutment
Implant dentaire comportant un faux-moignon incliné

(30) Priorität: 24.03.2003 DE 20304755 U
(43) Veröffentlichungstag der Anmeldung: 29.09.2004
(73) Patentinhaber: Sybron Implant Solutions GmbH, 28199 Bremen (DE)
(72) Erfinder: Grafelmann, Hans L., Prof. Dr., 28359 Bremen (DE)
(74) Vertreter: Leitner, Waldemar

(56) Entgegenhaltungen:
- US-A- 5 312 255
- US-A- 5 727 942
- US-A- 5 816 812
- US-B1- 6 276 938

## Beschreibung

Die Erfindung betrifft ein Kieferimplantat mit einem Implantatkörper mit Gewinde zum Einschrauben in einen Kiefer und einem Pfosten zum Halten von Zahnersatz, wobei die Längsachse des Pfostens gegenüber der Längsachse des Implantatkörpers abgewinkelt ist und der Implantatkörper und der Pfosten als ein Stück ausgebildet sind.

Kieferimplantate zum Einschrauben in den Kiefer zum Halten von Zahnersatz sind vielfach bekannt. Üblicherweise sind solche Implantate so ausgestaltet, dass sie zylindrisch sind und/oder ein Gewinde verschiedener Form zum Einschrauben in den Kiefer besitzen. An dem Übergang vom Implantatkörper zum Pfosten bzw. Hals des Implantats, der eine (beliebig polygone) Öffnung aufweist, können Werkzeuge ansetzen, mithilfe derer das Implantat in den Kiefer eingeschraubt werden kann.

Implantatkörper und Pfosten sind meistens zwei Teile, die durch eine zentrale Schraubverbindung miteinander verbunden werden können. An dem Übergang vom Implantatkörper zum Pfosten am Hals schließt sich der Pfosten an, der zum Befestigen des Zahnersatzes dient. Dabei kann ein solcher Zahnersatz sowohl als Ersatz für einen Einzelzahn oder auch als Ersatz mehrerer Zähne als Pfeiler ausgebildet sein. Wird nur ein Zahnersatz für einen einzelnen Zahn bereitgestellt, so kann dieser allein von einem am Implantat befestigten Pfosten getragen werden. Beim Ersatz mehrerer Zähne wird dieser Ersatz von mehreren Pfosten und dementsprechend mehreren Implantaten oder Nachbarzähnen getragen. Die Implantate sind dann nur an einigen strategischen Eckpunkten im Kiefer einzubringen und werden über brückenähnliche oder Steg- Konstruktionen miteinander verbunden um eine solide Basis für den Zahnersatz zu bilden.

Bei Ersatz eines einzelnen Zahnes ist die Abwinklung zwischen Pfosten und Implantatkörper an die gewünschte Stellung und Kronenneigung der zu ersetzenden Nachbarzähne anzupassen. Eine Abwinklung des Pfostens kann auch deshalb notwendig sein, weil die Insertionsrichtung des Implantats anatomisch bedingt in den verschiedenen Kieferbereichen unterschiedlich ist.

Die zervikale Implantatkörperöffnung eines zweiphasigen Implantats, d. h. der obere Abschnitt des Implantatkörpers, weist beispielsweise ein Außensechskant für ein übergreifendes Werkzeug oder eine Innensechs- oder -achtkantöffnung auf, in den ein entsprechendes Werkzeug zum Einschrauben des Implantats einoder angesetzt werden kann. In diese Innensechskant- oder beliebig polygone Öffnung kann nach dem Einschrauben des Implantats auch der Pfosten eingesetzt werden. Der Pfosten kann z. B. dann in sechs verschiedenen Richtungen in oder an das Implantat angesetzt werden. Um den Pfosten fest in dem Implantat zu halten, weist der Pfosten eine Bohrung und das Implantat nach der polygonen Profilöffnung ein Innensackgewinde auf. Zum Befestigen wird eine entsprechende Schraube zum Teil durch die Bohrung in den Pfosten geführt und in das Innengewinde des Implantats eingeschraubt.

Ein solcher Aufbau weist eine hohe Komplexität auf. Es kommt hinzu, dass die Fertigungsgenauigkeit des Außen- oder Innen-Halses des Implantats und des Ansatzes des Pfostens sehr hoch sein muss, um einen guten und festen Sitz des Pfostens zu gewährleisten. Ein solches Implantatsystem ohne Toleranzen ist daher bereits in der Fertigung sehr kostspielig.

Das Einbringen eines solchen Implantats erfordert zunächst, an der geplanten Stelle im Kiefer eine Kernbohrung vorzunehmen. Hierein kann das Implantat eingeschraubt werden. Danach erfolgt das Einsetzen und Befestigen des Temporär- oder Definitiv-Pfostens. Wenn bei dem eingesetzten Implantat keine zufriedenstellende Richtung des Pfostens erreicht werden kann, ist es erforderlich den Posten zu tauschen und entweder einen anderen abgewinkelten Pfosten einzusetzen oder bei der operativen Insertion zu versuchen, das Implantat im Kiefer zu drehen. Oftmals muss aus Gründen der Störung durch Frühbelastung oder stark spongiöser Knochensubstanz ohne bicorticale Abstützung während der Einheilungsphase bis zur Abdrucknahme anstelle des Pfostens ein Implantatkörperverschluss oder eine Abdeckschraube oder ein Gingivaformer eingesetzt werden. Ein solches bekanntes Implantat bedingt daher ebenfalls ein aufwändiges Einsetzen desselben. Ein aus dem Stand der Technik bekanntes zweiphasiges Implantat mit gerade oder abgewinkelten getrennten Pfosten weist daher den Nachteil sowohl hoher Fertigungskosten als auch hoher Behandlungskosten durch höheren Zeitaufwand bedingt durch je nach Knochensubstanzdichte und Implantatform erforderlicher längerer Einheilungsphase bis zu 6 Monaten auf.

Ein Kieferimplantat mit den Merkmalen des Oberbegriffs des Anspruchs 1 ist im US-Patent 5,727,942 beschrieben. Hierbei weist der Implantatschaft einen abgewinkelten Implantatkopf mit einem Vorsprung auf, der ein zentrales Innengewinde und eine beispielsweise oktagonale Außenkontur aufweist. Zum Einschrauben des Implantatkörpers in den Kiefer ist auf diesem Kopf ein Einsetzwerkzeug mit einer komplementär zum Vorsprung des Implantatkörpers ausgeformten Ausnehmung anbringbar, das durch eine schräge Bohrung durch den Körper des Einsetzwerkzeugs mit dem Innengewinde des abgewinkelten Kopfes des Implantatkörpers verschraubbar ist.

Derartige bekannte einstückige Kieferimplantate weisen jedoch insbesondere bei abgewinkelten Pfosten den Nachteil auf, dass sie die Insertion in den Kiefer erschweren.

Der Erfindung liegt daher die Aufgabe zugrunde, ein Kieferimplantat zu schaffen, das auf einfache Art und Weise in den Kiefer einsetzbar ist und dabei kostengünstig in der Fertigung, bruchsicher und rationell in der Anwendung sein sollte.

Die zugrunde liegende Aufgabe wird erfindungsgemäß dadurch gelöst, dass der Pfosten eine Abschrägung aufweist, welche vorzugsweise auf der abgewinkelten Seite des Pfostens angeordnet ist, wobei durch die Abschrägung die vormals größte auf die Achse des Implantatkörpers bezogene radiale Erstreckung des Pfostens verringert ist, so dass das Kieferimplantat zum Einschrauben in dem Kiefer einen geringeren Radius benötigt.

Die erfindungsgemäßen Maßnahmen besitzen den Vorteil, dass durch eine derartige einseitige oder zweiseitige Abflachung bzw. Abschrägung des Pfostens eine vorteilhafte Insertion und damit Pfostenausrichtung des erfindungsgemäßen Kieferimplantats erreicht wird. Eine solche Abschrägung ist vorzugsweise an der nach innen geneigten Seite des Pfostens ausgebildet, so dass sich eine Verringerung des Insertions-Radius bei der Insertion der Implantate mit Winkelpfosten ergibt. Somit wird erreicht, dass der Pfosten des Kieferimplantats beim Einschrauben in den Kiefer nicht durch benachbarte Zähne oder engstehenden benachbarten Zahnersatz behindert wird.

Durch die Ausgestaltung des Implantatkörpers und des Pfostens als ein Stück wird des weiteren erreicht, dass auf eine Vielzahl von Fertigungsschritten verzichtet werden kann. Die aufwendige Fertigung eines Halses des Implantatskörpers und eines Pfostenansatzes zur passgenauen und torsionsfreien und rotationssicheren Verbindung der beiden Elemente ist durch die einstückige Ausgestaltung in gerader und abgewinkelter Pfostenform überflüssig geworden. Weiterhin wird keine Befestigungsschraube zum Befestigen des Pfostens im Implantatkörper mehr benötigt. Ebenso entfällt das bisher hierfür notwendige, oft die Struktur des Implantats besonders bei Lateralbelastung (je nach Implantatsdurchmesser) schwächende Innengewinde und Insertionsschlüsselprofil im Implantatkörper.

Die Ausgestaltung des Implantatkörpers und des Pfostens als ein Stück führt ebenfalls zu einer Vereinfachung des Einsetzens des Implantates. Durch die einstückige Ausgestaltung kann ein Großteil der bisher notwendigen Arbeitsschritte auch im Labor entfallen. Außerdem kann der Pfosten beim Einschrauben des Implantates in den Kiefer bereits in die gewünschte Richtung gebracht werden. Das Einstellen der Richtung ist dabei stufenlos durch Drehung des Implantats bei der Insertion und in einem Arbeitsschritt möglich.

Weiterhin weist das erfindungsgemäße Kieferimplantat eine höhere Stabilität auf. Das liegt darin begründet, dass das erfindungsgemäße Kieferimplantat eine massive Metallkörperstruktur und Körperbeschichtung oder anrauende Oberflächenbehandlung aufweist und aufgrund des Fehlens der Verbindungsschraube weder eine Schraubenlockerung noch ein Schraubenbruch oder Schwächung der Implantatkonstruktion selbst bei kleinen Durchmessern und bei extremer Belastung auftreten kann, so dass sogar der Durchmesser reduziert und durch verlängerte Formen eine biocorticale Abstützung erreicht werden kann.

Aufgrund der intra-operativen Ausrichtungsmöglichkeit, die bei dem Einsetzen des erfindungsgemäßen Kieferimplantats erfolgt, kann ebenfalls intra-operativ eine Okklusions- und Richtungskontrolle erfolgen, die durch 3-D-Computertomographie- oder Roboterdiagnose-Systeme exakt vorausbestimmt werden kann.

Weiterhin kann noch vor dem Wundverschluss eine Kontrolle der Implantatpfosten-Parallel-Verlaufsrichtung und Okklusionskontrolle zu anderen Implantaten oder natürlichen Zahnpfeilern erfolgen.

Eine weitere Ausgestaltung des Kieferimplantats ist dadurch gekennzeichnet, dass das Gewinde ein selbstschneidendes Expansivgewinde ist. Hierdurch wird eine einfache Möglichkeit geschaffen, das Implantat mit genormten oder durchmesserreduzierten Bohrern ohne Gewindevorschneiden in den Kiefer einzusetzen, wobei gleichzeitig aufgrund des Gewindeverlaufs schon von Anfang an Knochenkontakt auch zwischen den Wendeln erfolgt und eine sehr hohe initiale Festigkeit erreicht wird. Es ist hier lediglich erforderlich, an der gewünschten Stelle im Kiefer zur Schonung des zukünftigen Knochenlagers eine stufenweise Knochenaufbereitung mit verschiedenen vergrößernden Bohrerdurchmessern beginnend mit der Kernbohrung durchzuführen, in die dann das Kieferimplantat direkt eingeschraubt werden kann. Das selbstschneidende Gewinde schneidet direkt beim Einschrauben seinen Gewindegang in den Knochen. Aufgrund der Ausgestaltung als Parallelaußengewinde und Expansivgewinde bei konischem Gewindekern des Implantatkörpers erreicht das Kieferimplantat beim Einschrauben in den Kiefer mit seinem Gewinde einen stabilen initialen Knochenverbund in den Gewindegängen. Es besteht jedoch keine Beschränkung auf ein solches Gewinde. Es können alle Arten und Formen von Gewinden eingesetzt werden.

Das Kieferimplantat weist in einer besonderen Gestaltung einen Pfosten mit einer gingivalen Umlaufstufe auf. Diese kann verschiedene Winkel, Stufenbreiten und - höhen aufweisen. Eine solche gingivale Umlaufstufe kann die Funktion übernehmen, die bei einem mehrstückigen Kieferimplantat in der Heilungsphase durch einen Gingivaformer bewirkt wird. Es wird hierdurch erreicht, dass sich das Zahnfleisch optimal an den späteren Zahnersatz anpassen kann. Dadurch entfällt zugleich die Zweit-Operation zur Freilegung eines zweiphasigen Implantats mit erneuten gingivoplastischen Manipulationen.

Für den Wendelabstand des Gewindes des Kieferimplantats haben sich Werte zwischen 0,6 und 2 mm als günstig erwiesen. Ein solcher Wendelabstand weist eine ausreichende Stärke der Bereiche zwischen den Gewindegängen als Knochen-Anlagerungsfläche aus, ohne dabei zu einer zu großen Gewindesteigung zu führen.

Bevorzugt ist die Oberfläche des Implantates insbesondere des Implantatkörpers maschinenstrukturiert oder beschichtet mit VTPS (Vakuum-Titanplasmaspray) oder FBR oder anderem Material oder doppeltbeschichtet mit VTPS und FBR oder Zusätzen oder knochenbildungsfördernden Beschichtungsmaterialen, sandgestrahlt und/oder säure-geätzt aufgeraut. Durch diese vergrößernden Oberflächenbehandlungen und Selbstschneidefähigkeit wird ein Verwachsen des Definitivimplantats mit dem Kieferknochen begünstigt. Insbesondere durch die VTPSund/oder FBR-Beschichtung wird das Knochenwachstum beschleunigt, z. B. kann bereits nach 6 - 9 Wochen eine Osseointegration erreicht werden, so dass sich ein kontinuierlicher Kontakt-Übergang vom Knochen zum Implantat ergibt. Hierbei ist bei Beachtung der vorgeschriebenen Insertionstechnik keine Abstoßreaktion des Körpers zu befürchten. FBR ist eine vollständig resorbierbare bioaktive Schicht, die in einem elektrochemischen Verfahren auf eine Vakuum-Titanplasma-Beschichtung aufgebracht wird. Diese dünne Calziumphosphat-Schicht von 5-20 µm besteht hauptsächlich aus Brushit (CaP = 1,1 ). Diese bioaktive Beschichtung hat eine besonders hohe Kapillaritätseigenschaft und dient als Leitschiene für die Knochenneubildung. Sie wird nach ausgedehnten wissenschaftlichen Untersuchungen und Feldversuchen innerhalb von 6 - 12 Wochen voll resorbiert.

Zum erleichterten Selbstschneiden und zum Erreichen einer hohen initialen Festigkeit des eingeschraubten Implantats und zum schnelleren Verwachsen ist der Implantatkörper bevorzugt mit Schnittkerben im Gewinde versehen. Beim Verwachsen, d. h. im Verlauf des Osseointegrationsvorgangs wächst der Knochen ebenfalls in diese Kerben hinein und erhöht somit die Rotationsstabilität des Implantats.

Bevorzugt sind diese im Gewinde angeordneten Schnittkerben regelmäßig oder unregelmäßig in den Wendeln zueinander versetzt. Der Versatz kann u. a. im Uhrzeigesinn oder im Gegenuhrzeigersinn sein. Das Einwachsen des Knochens in diese Kerben hinein ist somit nicht nur axial sondern auch über den Umfang und Verlauf des Implantatkörpers verteilt. Die geschärften Schnittkerben verbessern nicht nur die Selbstschneidefähigkeit des Gewindes bei der Insertion, besonders bei kortikalem Knochen. Sie erleichtern auch eine zusätzliche Verstärkung der Rotationssicherung durch den angewachsenen Knochen. Die Kerben können axial sowie schräg in oder gegen die Uhrzeigerrichtung zur Insertionsachse ausgebildet sein.

Als günstig hat sich eine Ausgestaltung erwiesen, bei der der Außendurchmesser des Gewindes und des oberen Zervikalanteils des Implantatkörpers von zervikal nach apikal bzw. umgekehrt konstant bleibt - oder apikal in den letzten 2-3 Wendeln gering durchmesser - reduziert ist. Bevorzugt ist der Kern des Gewindes bzw. des Implantatschaftes konisch ausgebildet. Beim Einschrauben des Gewindes übt ein solches Gewinde mit konischem Kern mit apikaler Schnitt- und zervikaler Expansionsfunktion eine radiale Kraft aus und erreicht dadurch eine hohe initiale Festigkeit des eingeschraubten Implantats.

Gemäß dieser bevorzugten Ausführungsform nimmt die Tiefe des Gewindes von apikal nach zervikal bis auf Null ab. Hierdurch wird erreicht, dass das vollständig eingeschraubte Gewinde am Hals des Implantatskörpers einen glatten und expansiv wirkenden Abschluss zum Kieferniveau ermöglicht.

Das erfindungsgemäße Kieferimplantat hat in einer weiteren Ausgestaltung einen Pfosten, der zum Ansetzen eines Eindrehwerkzeuges eine nicht runde Öffnung aufweist. Hierdurch wird ermöglicht, dass das Kieferimplantat mithilfe eines entsprechenden Werkzeuges (z. B. Hex, Octagon oder Nuten-Werkzeug) in den Kiefer eingeschraubt werden kann. Bevorzugt weist eine solche Öffnung eine Längsachse auf, die mit der des Implantatkörpers übereinstimmt. Ein Drehmoment kann somit besonders günstig und zielgerichtet auf den Implantatkörper zum Einschrauben übertragen werden. Um ein festes und sicheres Eingreifen eines Drehwerkzeuges zu gewährleisten, ist die Öffnung konisch und/oder im Querschnitt polygonförmig ausgestaltet.

Gemäß einer weiteren bevorzugten Ausführungsform weist das Gewindeende des Implantatkörpers apikal eine abgerundete Spitze auf. Eine solche Abrundung verhindert das unbeabsichtigte Durchdringen von Knochen- oder Membran-Gewebe, wenn der Implantatkörper auf anatomische Begrenzungen stößt. Ein solcher Fall tritt insbesondere auf, wenn ein Implantatkörper in den Oberkiefer unterhalb der Kieferhöhle eingesetzt wird. In diesem Fall wird erreicht, dass der Implantatkörper bei der Perforation des begrenzenden Knochens zwar grundsätzlich in die Kieferhöhle hineinreichen kann, jedoch nicht notwendigerweise die Schleimhaut scharf durchstößt, sondern diese lediglich anhebt (= passiver Sinus Lift).

Gemäß eines weiteren Aspektes der Erfindung wird ein Kieferimplantat gemäß dem Anspruch 16 vorgeschlagen. Mithilfe einer derartigen gingivalen Umlaufstufe ist ein schonendes Einschrauben in den Kieferknochen möglich, da durch die Umlaufstufe das Zahnfleisch bzw. die gingivale Manschette im Durchtrittsbereich verdrängt wird und gleichzeitig ein Anschluss für den aufzusetzenden Zahnersatz vorliegt. Dies ist auch günstig bei nur gingivaler Ausstanzung oder Schlitzung ohne Periostelevation, d.h. ohne Freilegung des gesamten Kieferkammprofils. Die gingivale Umlaufstufe kann in verschiedener Breite, Höhe und auch asymmetrisch vorgesehen sein. Sie kann dem gingivalen Verlauf durch Nacharbeit auch später vor der prothetischen Endversorgung nachpräpariert und angepasst werden.

Eine gingivale Umlaufstufe ist bevorzugt im Bereich zwischen Pfostenbasis und Implantatkörper angeordnet. In weiteren Ausgestaltungen weist die gingivale Umlaufstufe eine im Wesentlichen ebene oder geschwungene Oberseite und eine sich konisch verjüngende Unterseite auf. Eine solche Ausgestaltung hat sich als günstig erwiesen. In einer weiteren Ausgestaltung ist das Kieferimplantat dadurch gekennzeichnet, dass die gingivale Umlaufstufe mit ihrer höheren, d. h. weiter von der Spitze des Implantates beabstandeten Seite auf der Winkelinnenseite oder außenseite des Pfostens angeordnet ist. Hierdurch werden die unterschiedlichen Insertionsrichtungen im Ober- und Unterkiefer, bedingt durch anatomische und atrophische Vorgänge, und die sich ändernden labialen, zervikalen, palatinalen oder lingualen gingivalen und prothetischen Erfordernisse berücksichtigt. Weiterhin kann die Umlaufstufe in verschiedenen Abwinklungen zur Implantatpfostenachse oder zum Implantataußendurchmesser, d. h. im stumpfen oder spitzen oder 90° Winkel angeordnet bzw. angelegt sein.

Die Erfindung wird nachfolgend anhand der folgenden Zeichnungen näher erläutert. Es zeigen:
- Figur 1: ein erfindungsgemäßes Kieferimplantat im Querschnitt mit Pfostenabwinkelung und mit gingivaler Umlaufstufe;
- Figur 2: ein erfindungsgemäßes Kieferimplantat im Querschnitt ohne gingivale Umlaufstufe mit Abwinkelungen;
- Figur 3: ein Kieferimplantat ohne Abwinklung auch mit horizontal gleichlaufender Umlaufstufe;
- Figur 4: ein Kieferimplantat ohne Abwinklung und ohne Umlaufstufe;
- Figur 5: ein alternatives Ausführungsbeispiel eines Kieferimplantates mit Öffnung zum Einsetzen eines Drehwerkzeugs;
- Figur 6: ein alternatives Ausführungsbeispiel eines Kieferimplantates mit gingivaler Umlaufstufe;
- Figur 7: ein alternatives Ausführungsbeispiel eines Kieferimplantates mit gingivaler Umlaufstufe z.B. bei flachem Innenwinkel des Pfostens ;
- Figur 8: eine Hülse und Griff für einen pfostenübergreifenden Schlüssel in einer Schnittdarstellung und einer Draufsicht;
- Figur 9: einen pfostenübergreifenden Schlüssel zur Implantatachsen-parallelen Insertion, und
- Figur 10: einen pfostenübergreifenden Schlüssel mit Hülse in einem auf einen abgewinkelten Pfosten aufgesetzten Zustand zur Implantatachsenparallelen Insertion.

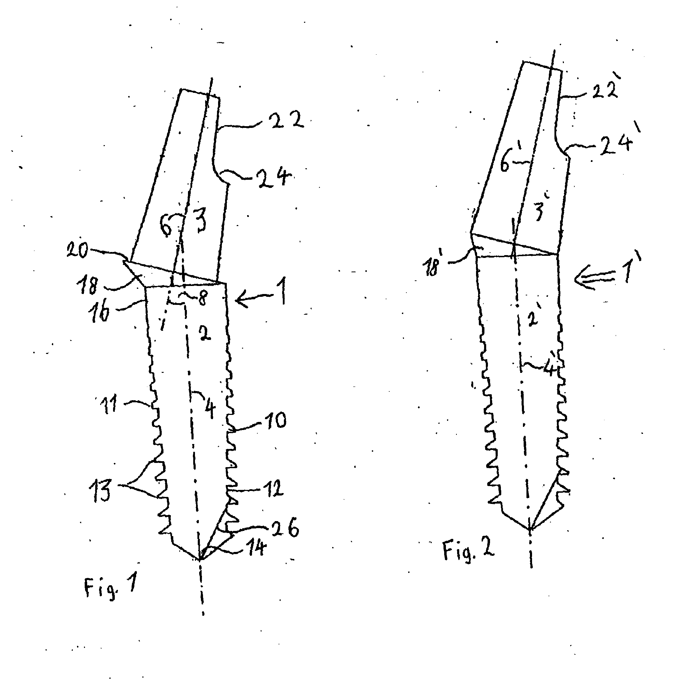

Das Kieferimplantat 1 gemäß Figur 1 weist einen Implantatkörper 2 und einen Pfosten 3 auf. Der Implantatkörper 2 hat eine Längsachse 4 und der Pfosten 3 hat eine Längsachse 6. Die beiden Achsen 4, 6 sind mit einem Winkel 8 gegeneinander gekippt. Der Winkel 8 weist typischerweise Werte von 0 bis 50° Grad auf. Noch größere Werte kommen für diesen Winkel allenfalls in Ausnahmefällen in Betracht.

Der Implantatkörper 2 weist ein Gewinde 10 mit einem Gewindekern 12 auf. Der Implantatkörper 2 schließt mit einer abgerundeten Spitze 14 ab. Der Durchmesser des konischen Gewindekerns 12 nimmt vom Hals 16, d.h. dem oberen Abschnitt des Implantatkörpers 2 zur Spitze 14 hin ab. Beim Hals 16 ist der Durchmesser des Gewindekerns mit dem Durchmesser des Halses 16 des Implantatkörpers 2 bis apikal identisch. Der Außendurchmesser des Gewindes 10 bleibt über seine gesamte Länge (von zervikal nach apikal) konstant. Der Außendurchmesser des Gewindes 10 entspricht dem Durchmesser des Halses 16 des Implantatkörpers 2. Dementsprechend nimmt die Gewindetiefe des Gewindes 10 von der Spitze 14 zum Hals 16 hin bis auf 0 ab.

Im Verbindungsbereich zwischen Implantatkörper 2 und Pfosten 3 ist ein Ansatz 18 ausgebildet, der eine gingivale Umlaufstufe 20 aufweist. Die Umlaufstufe 20 ist so ausgebildet, dass sie im eingesetzten Zustand des Implantatkörpers im Bereich des Zahnfleischs und vorzugsweise parallel zum Gingivalrand verläuft. Ein Zahnersatz, der auf den Pfosten 3 aufgesetzt wird, kann auf dieser gingivalen Umlaufstufe 20 aufliegen, so dass sich im Bereich des Ansatzes 18 ein günstiger Übergang vom Kieferimplantat zum aufgesetzten Zahnersatz ergibt (der Zahnersatz ist in der Figur 1 nicht dargestellt).

Der Pfosten 3 weist eine Abschrägung 22 auf, so dass das Kieferimplantat 1 zum Einschrauben in den Kiefer einen geringeren Radius benötigt. Durch die Abschrägung 22 ist die vormals größte auf die Achse 4 des Implantatkörpers 2 bezogene radiale Erstreckung des Pfostens 3 verringert worden. Der Pfosten 3 mit Abschrägung 22 weist somit eine Unsymmetrie auf, die bei einem entsprechend angepassten Zahnersatz jedoch keine nachteiligen Auswirkungen auf den Halt des Zahnersatzes hat. Die Abschrägung 22 zum Ansatz von übergreifenden rotationssicheren Insertionsschlüsseln ist mit einer Abrundung 24 oder Winkelung ausgeführt, die für die Wirkung der Abschrägung nicht wesentlich ist, jedoch einen günstigen Anschlag für den aufzusteckenden Zahnersatz bildet und außerdem fertigungstechnisch einfach zu realisieren ist für übergreifende rotationssichere Insertionsschlüssel. Ein auf den abgewinkelten Pfosten aufgesetzter Schlüssel ändert die Pfostenrichtung in Insertionsrichtung des Implantatkörpers.

Der Implantatkörper 2 weist eine oder mehrere apikale Anschnittkerben 26 auf, die das selbstschneidende Einführen des Implantatkörpers 2 in den Kiefer begünstigt. Die gewebeschützende Wirkung einer runden Spitze 14 wird hierdurch jedoch nicht beeinträchtigt.

Die Wendel 13 des Gewindes 10 laufen im Bereich der Spitze 14 radial nach außen hin scharf/angeschärft bzw. spitz zu. Diese spitze Ausbildung im äußeren apikalen Umfangsbereich fördert die initiale Schnittwirkung des Gewindes 10 und geht in Richtung des Halses 16 des Implantatkörpers in eine Ausgestaltung mit Rand 11 über, wobei die Größe/Breite des Wendelaußenrandes 11 zum Hals 16 des Implantatkörpers 2 hin zunimmt. Beim Einschrauben des Implantatkörpers 2 in den Kiefer schneiden die Wendel 13 ein Gewinde in den Kiefer und dehnen sich mit fortschreitendem, vertiefenden Einschrauben in die so geschaffenen Ausnehmungen des Gewindes im Kiefer aus. Hiermit wird initial ein fester Sitz des Implantatkörpers 2 in dem Kiefer erreicht.

Das Kieferimplantat 1' gemäß Figur 2 weist einen Implantatkörper 2' und einen Pfosten 3' auf, die im Bereich eines Ansatzes 18' einstückweise miteinander verbunden sind. Die Ausgestaltung des Kieferimplantates 1' der Figur 2 unterscheidet sich von dem Kieferimplantat 1 der Figur 1 darin, dass das Kieferimplantat 1' im Bereich des Ansatzes 18' keine gingivale Umlaufstufe aufweist. Weiterhin weisen der Implantatkörper 2' und der Pfosten 3' gemäß Figur 2 einen schwächeren Versatz zueinander auf, als der Implantatkörper 2 und der Pfosten 3 gemäß Figur 1. Das ist auch durch den Vergleich der beiden Schnittpunkte der Achse 4' des Implantatkörpers 2' mit der Achse 6' des Pfostens 3' gemäß Figur 2 und der Achse 4 des Implantatkörpers 2 mit der Achse 6 des Pfostens 3 gemäß Figur 1 miteinander zu erkennen.

Zum Aufsetzen eines Zahnersatzes auf den Pfosten 3' eines Kieferimplantats 1' gemäß Figur 2 ist der Zahnersatz so auszubilden, dass sich ein günstiger Übergang vom Zahnersatz zum Pfosten 3' bzw. zum Ansatz 18' ergibt. Für das Kieferimplantat 1' sollte ein Zahnersatz daher nahtlos bis zum Rand seiner Öffnung verlaufen, in die der Pfosten 3' beim Aufsetzen des Zahnersatzes eingeführt wird.

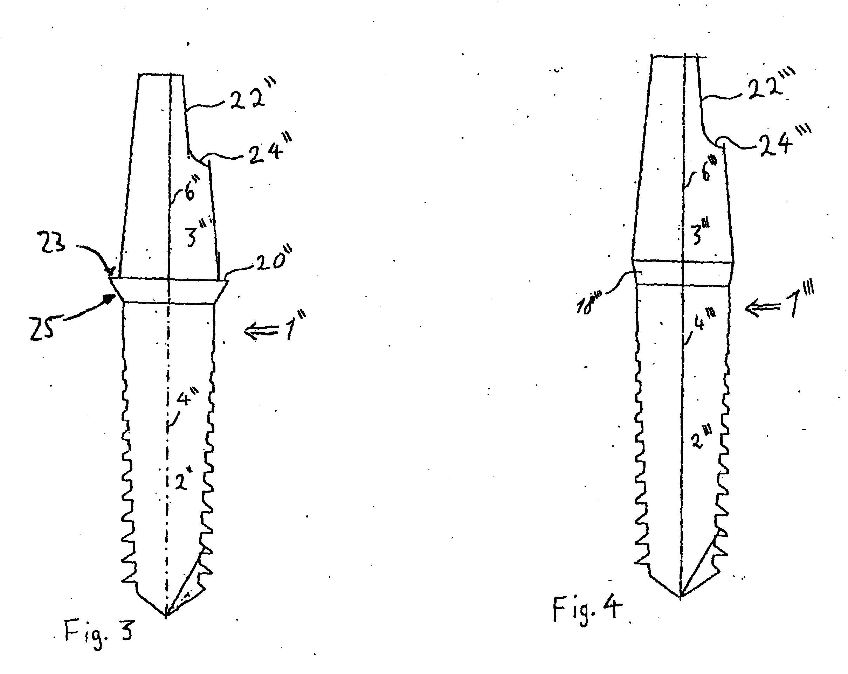

Das Kieferimplantat 1" gemäß Figur 3 weist einen lmplantatkörper 2" mit einer Achse 4". auf. Die Achse 4" ist identisch mit der Achse 6" des Pfostens 3". Ebenfalls weist das Kieferimplantat eine gingivale Umlaufstufe 20" auf, die hier als gleichmäßig um den Pfosten 3" umlaufender Ansatz ausgebildet ist. Die Umlaufstufe weist eine im Wesentlichen ebene Oberseite 23 und eine sich konisch verjüngende Unterseite 25 auf. Die weiteren Merkmale des Kieferimplantates 1" gemäß Figur 3 entsprechen dem abgewinkelten Kieferimplantat 1 gemäß Figur 1.

Figur 4 zeigt ebenfalls ein Kieferimplantat 1"' bei dem die Achse 4"' des lmplantatkörpers 2"' mit der Achse 6"' des Pfostens 3"' identisch ist. Dieses Kieferimplantat 1 "' weist im Bereich des Ansatzes 18"' keine gingivale Umlaufstufe auf. Das Kieferimplantat 1"' entspricht somit dem Kieferimplantat 1' gemäß Figur 2 mit dem Unterschied, dass das Kieferimplantat 1' gemäß Figur 2 eine Abwinklung zwischen Pfosten 3' und lmplantatkörper 2' aufweist.

Insbesondere ist wichtig, dass die Pfosten 3-3"' gleich ausgebildet sind und somit die gleiche Passform für den aufzusetzenden Zahnersatz aufweisen. Aus diesem Grunde sind auch die Abschrägung 22-22"' und Ihre Abrundung 24-24"' trotz unterschiedlicher Abwicklung der Pfosten 3-3"' gegenüber dem lmplantatkörper 2-2"' gleich ausgebildet. Die Gleichheit der Pfosten 3-3"' verringert den Aufwand zur Herstellung des darauf anzupassenden Zahnersatzes, auch durch in einheitlicher Größe vorhandene, vergießbare Labor-Modellierkappen.

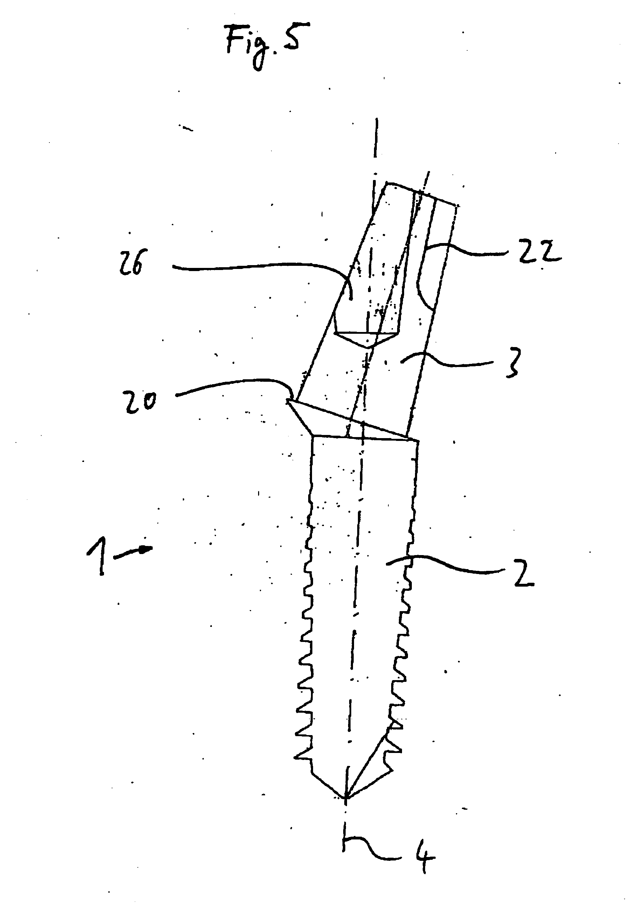

Das in Figur 5 gezeigte alternative Ausführungsbeispiel entspricht dem Ausführungsbeispiel von Figur 1, so dass auf die obigen Beschreibungen vollumfänglich Bezug genommen wird. Es ist zusätzlich jedoch eine bezogen auf die Zentralachse 4 des Implantatkörpers 2 konzentrisch angeordnete Öffnung 26 im Pfosten 3 ausgebildet, in welche ein Drehwerkzeug eingesetzt werden kann zum einfachen Einschrauben oder Herausschrauben des Implantats. Die Öffnung 26 ist als Innensechskant, Innenachtkant, als nicht runde polygone Öffnung oder dgl. ausgebildet.

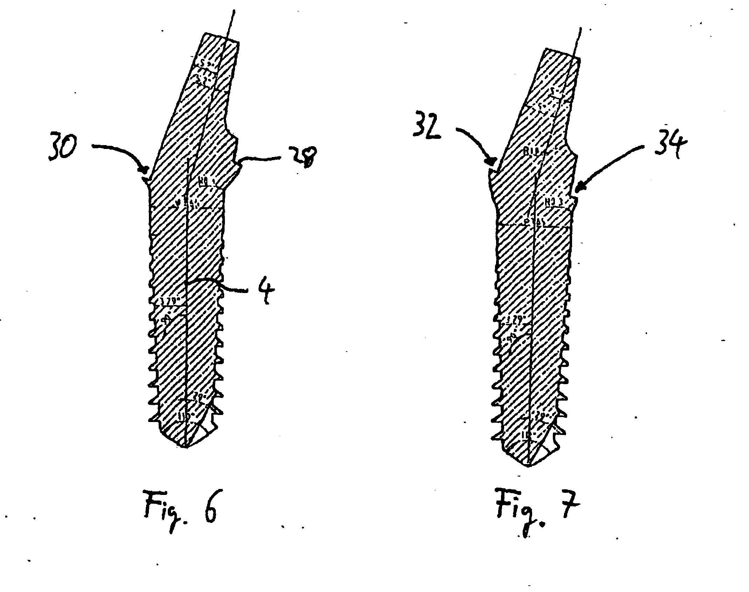

Figur 6 zeigt ein erfindungsgemäßes Kieferimplantat 1 mit einer umlaufenden gingivalen Umlaufstufe, bei der diese auf der abgewinkelten Seite einen größeren Abstand von der unteren Spitze des Implantates aufweist, also die Umlaufstufe auf dieser Seite höher ist als auf der gegenüberliegenden Seite, wo die Umlaufstufe demgegenüber einen geringeren Abstand von der unteren Spitze des Implantates aufweist. Die höhere Seite der Umlaufstufe ist durch das Bezugszeichen 28, die niedrigere Seite der Umlaufstufe durch das Bezugszeichen 30 gekennzeichnet. Die gesamte Umlaufstufe kann in einer Ebene, die schräg bezogen auf die Zentralachse 4 angeordnet ist, liegen, aber alternativ (nicht dargestellt) auch einen geschwungenen, gewissermaßen welligen Verlauf haben. Durch eine derartige Umlaufstufe kann vorteilhafterweise erreicht werden, dass im labialen und vestibulären Supragingivalbereich die Transparenz (ein Durchscheinen) des Titanmetalls durch das Zahnfleisch hindurch verhindert wird, so dass bei der Zahnersatz-Pfosten-/Kronengrenze eine bessere Ästhetik erreicht wird.

Figur 7 zeigt ein weiteres erfindungsgemäßes Implantat mit einem abgewinkelten Pfosten 3 und einer gingivalen Umlaufstufe, bei der auf der nicht abgewinkelten Seite bei Ziffer 32 die gingivale Umlaufstufe einen größeren Abstand zur unteren Spitze des Implantates aufweist, also höher angeordnet ist als auf der gegenüberliegenden abgewinkelten Seite, gekennzeichnet durch das Bezugszeichen 34, wo die Umlaufstufe niedriger liegt, also einen geringeren Abstand von der - unteren - Spitze des Implantatkörpers aufweist. Hinsichtlich der Vorteile wird auf die obigen Beschreibungen zu Figur 6 Bezug genommen. Die unterschiedliche Neigung der Pfostenwinkel und der unterschiedliche Umlaufstufenverlauf hat den Vorteil der Anpassung an die anatomischen Bedingungen und der Implantat-Insertionsrichtung und des Gingivalverlaufs.

Die in Figur 6 und 7 gezeigten Modifikationen berücksichtigen die unterschiedlichen Insertionsrichtungen im Ober- und Unterkiefer, die durch anatomische und atrophische Vorgänge und die sich ändernden labialen, zervikalen, palatinalen oder lingualen gingivalen und prothetischen Erfordernisse bedingt sein können.

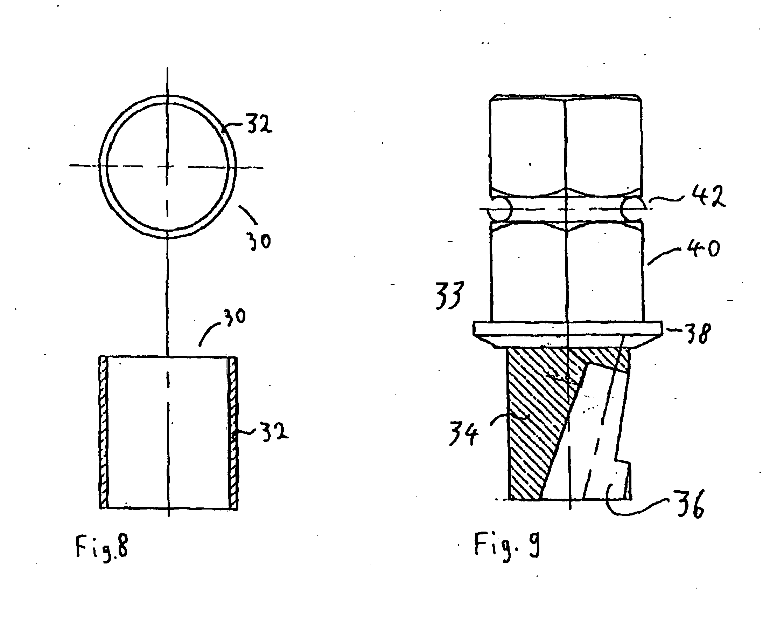

In Figur 8 ist eine zylindrische Hülse 30 mit einem Zylindermantel 32 dargestellt, deren Funktion nachfolgend näher erläutert ist und die Teil eines Insertionsinstrumentes ist. Figur 9 zeigt einen pfostenübergreifenden Schlüssel 33 (Insertionswerkzeug) mit einem Ansatz 34 zum Aufnehmen eines Pfostens in seiner Öffnung 36, die der Pfostenform angepasst ist. An den Ansatz 34 grenzt ein Kragen 38 und daran ein Außensechs- oder achtkant 40 zum Ansetzen eines weiteren Drehwerkzeugs an, welches durch einen in eine umlaufende Nut einsetzbaren elastischen O-Ring 42 unterbrochen ist. Der Außensechskant 40 dient zum Ansetzen eines weiteren Drehwerkzeugs. Der elastische O-Ring 42 zur Schlüsselretention ist dazu vorgesehen das Herausrutschen des pfostenübergreifenden Schlüssels 33 aus einen aufgesetzten Drehwerkzeug zu verhindern. Der Kragen 38 verhindert, dass ein aufgesetztes Drehwerkzeug in Richtung des Ansatzes 34 hinüberrutscht. Der Kragen 38 ermöglicht somit, dass ein angesetztes Drehwerkzeug eine axiale Kraft auf den pfostenübergreifenden Schlüssel 33 und damit auf ein Kieferimplantat ausüben kann. Dabei ermöglicht der Außensechskant 40, dass von einem Drehwerkzeug ein Drehmoment auf den pfostenübergreifenden Schlüssel und damit auf das Kieferimplantat ausgeübt und kontrolliert werden kann. Die in Figur 8 dargestellte Hülse 30 kann über den Ansatz 34 zum Aufnehmen eines Pfostens gesteckt werden, und somit den auf einen Pfosten aufgesetzten Schlüssel 33 im Bereich des Ansatzes 34 stützen. Die Hülse 30 stößt im aufgesteckten Zustand gegen den Kragen 38.

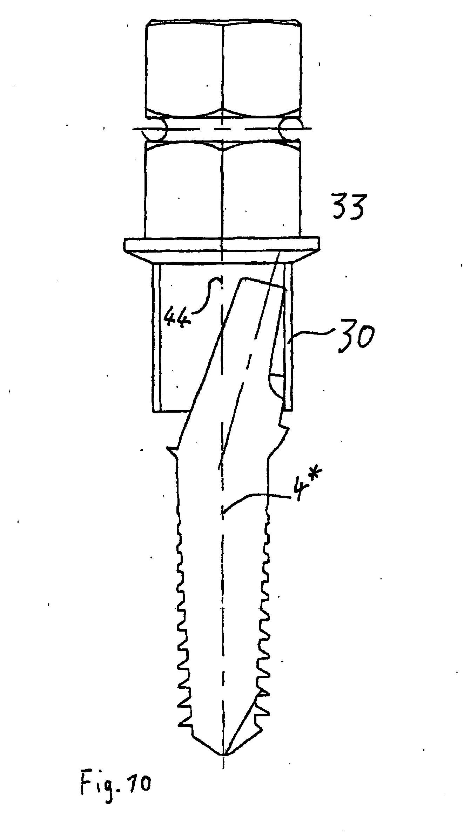

Figur 10 zeigt wie der pfostenübergreifende Schlüssel 33 zusammen mit einer aufgesteckten Hülse 30 auf einem Kieferimplantat mit abgewinkelten Pfosten aufgesetzt ist. Das in Figur 10 dargestellte Kieferimplantat entspricht dem in Figur 6 dargestellten. Die Achse 44 des pfostenübergreifenden Schlüssels 33 ist im auf dem abgewinkelten Pfosten eines Kieferimplantats aufgesetzten Zustand des Schlüssels 33 mit der Achse 4* des Implantatkörpers identisch. Somit kann trotz abgewinkelten Pfostens mithilfe des pfostenübergreifenden Schlüssels 33 ein auf die Achse 4* eines Implantatkörpers bezogenes Drehmoment ausgeübt werden. Somit kann auch ein einstückiges Kieferimplantat mit abgewinkeltem Pfosten auf einfache Weise in den Kieferknochen eingeschraubt werden.

Die vorliegende Erfindung schafft somit ein einstückiges Kieferimplantat 1-1"', das auf einfache Weise in den Kiefer inseriert werden kann. Dabei kann das Implantat bezüglich der Pfostenstellung, -winkelung und -richtung beim Einschrauben sogleich ausgerichtet werden und bereits im nächsten Schritt den Zahnersatz aufnehmen und halten. Fertigungskosten des Kieferimplantats sowie Behandlungskosten können gegenüber zweiphasigen Implantatsystemen somit signifikant verringert werden.

## Patentansprüche

1. Kieferimplantat (1) mit einem Implantatkörper (2) mit Gewinde (10) zum Einschrauben in einen Kiefer, und einem Pfosten (3) zum Halten von Zahnersatz, wobei die Längsachse (6) des Pfostens (3) gegenüber der Längsachse (4) des Implantatkörpers (2) abgewinkelt ist und der Implantatkörper (2) und der Pfosten (3) als ein Stück ausgebildet sind, **dadurch gekennzeichnet, dass** der Pfosten (3) eine Abschrägung (22) aufweist, welche nur auf der abgewinkelten Seite des Pfostens (3) angeordnet ist, wobei durch die Abschrägung (22) die vormals größte auf die Achse (4) des Implantatkörpers (2) bezogene radiale Erstreckung des Pfostens (3) verringert ist, so dass das Kieferimplantat (1) zum Einschrauben in dem Kiefer einen geringeren Radius benötigt.

2. Kieferimplantat nach Anspruch 1, **dadurch gekennzeichnet, dass** das Gewinde (10) ein selbstschneidendes Expansivgewinde ist.

3. Kieferimplantat nach einem der vorstehenden Ansprüche, **dadurch gekennzeichnet, dass** der Pfosten (3) eine gingivale Umlaufstufe (20) aufweist.

4. Kieferimplantat nach einem der vorstehenden Ansprüche, **dadurch gekennzeichnet, dass** der Wendelabstand des Gewindes zwischen 0,6 und 2 mm liegt.

5. Kieferimplantat nach einem der vorstehenden Ansprüche, **dadurch gekennzeichnet, dass** die Oberfläche des Kieferimplantates (1) strukturiert und/oder mit einer Titanplasma-Beschichtung und/oder einer vollständig resorbierbaren bioaktiven Schicht beschichtet ist oder durch ein anderes Material beschichtet ist und/oder sandgestrahlt und/oder säure-geätzt aufgeraut ist.

6. Kieferimplantat nach einem der vorstehenden Ansprüche, **dadurch gekennzeichnet, dass** der Implantatkörper (2) vorzugsweise axiale Schnittkerben im Gewindeverlauf (10) aufweist.

7. Kieferimplantat nach einem der vorstehenden Ansprüche, **dadurch gekennzeichnet, dass** die axialen Schnittkerben zueinander versetzt sind.

8. Kieferimplantat nach einem der vorstehenden Ansprüche, **dadurch gekennzeichnet, dass** der Außendurchmesser des Gewindes (10) von zervikal nach apikal konstant bleibt.

9. Kieferimplantat nach Anspruch 8, **dadurch gekennzeichnet, dass** der Außendurchmesser des Gewindes (10) in den letzten 2-3 apikalen Wendeln um ca. 1-3 mm reduziert ist.

10. Kieferimplantat nach einem der vorstehenden Ansprüche, **dadurch gekennzeichnet, dass** der Kern des Gewindes (10) konisch ausgebildet ist.

11. Kieferimplantat nach einen der vorstehenden Ansprüche, **dadurch gekennzeichnet, dass** die Tiefe des Gewindes von apikal nach zervikal bis auf null abnimmt.

12. Kieferimplantat nach einem der vorstehenden Ansprüche, **dadurch gekennzeichnet, dass** der Pfosten (3) eine Öffnung (25) zum Ansetzen eines Drehwerkzeugs aufweist.

13. Kieferimplantat nach einem der vorstehenden Ansprüche, **dadurch gekennzeichnet, dass** die Längsachse der Öffnung mit der des Implantatkörpers (2) übereinstimmt.

14. Kieferimplantat nach einem der vorstehenden Ansprüche, **dadurch gekennzeichnet, dass** die Öffnung konisch und/oder im Querschnitt polygonförmig ausgestaltet ist.

15. Kieferimplantat nach einem der vorstehenden Ansprüche, **dadurch gekennzeichnet dass** auf dem Außenprofil des Pfostens mindestens eine weitere An- oder Einsatzvorrichtung für ein Drehwerkzeug angebracht ist.

16. Kieferimplantat nach einem der vorstehenden Ansprüche, **dadurch gekennzeichnet, dass** das Gewindeende apikal eine abgerundete Spitze aufweist.

17. Kieferimplantat nach einem der vorstehenden Ansprüche, **dadurch gekennzeichnet, dass** eine gingivale Umlaufstufe (20") in verschiedener Breite und Höhe und/oder Anwinkelung vorgesehen ist, wobei vorzugsweise der Verlauf der gingivalen Umlaufstufe asymmetrisch ist.

18. Kieferimplantat nach Anspruch 17, **dadurch gekennzeichnet, dass** die gingivale Umlaufstufe im Bereich zwischen Pfostenbasis und Implantatkörper angeordnet ist.

19. Kieferimplantat nach einen der vorstehenden Ansprüche, **dadurch gekennzeichnet dass** die gingivale Umlaufstufe eine im wesentlichen ebene oder geschwungene Oberseite und eine sich konisch verjüngende Unterseite aufweist.

20. Kieferimplantat nach einem der vorstehenden Ansprüche, **dadurch gekennzeichnet, dass** die gingivale Umlaufstufe mit ihrer höheren, d. h. weiter von der Spitze des Implantates beabstandeten Seite auf der Winkelinnenseite oder -außenseite des Pfostens angeordnet ist.

21. Insertionsschlüssel für ein Kieferimplantat, **dadurch gekennzeichnet, dass** der Insertionsschlüssel so ausgebildet ist, dass er zum Drehen, insbesondere Einschrauben, des Kieferimplantats auf einen abgewinkelten Pfosten (3) eines Kieferimplantats (1) nach einem der vorstehenden Ansprüche aufgesetzt werden kann, wobei die Achse (44) des den Pfosten (3) übergreifenden Insertionsschlüssels (23) im auf dem abgewickelten Pfosten (3) des Kieferimplantats (1) aufgesetzten Zustands des Schlüssels (33) mit einer Achse (4*) des Implantatskörpers (2) identisch ist, wobei der Insertionsschlüssel einen Ansatz (34) zum Aufnehmen des Pfostens (3) in seiner Öffnung, die dem Pfosten angepasst ist, aufweist.

## Claims

1. Jaw implant (1) having an implant body (2) with a thread (10) for screwing it into a jaw and a post (3) for supporting a dental prosthesis, the longitudinal axis (6) of the post (3) being angled with respect to the longitudinal axis (4) of the implant body (2), and the implant body (2) and the post (3) being formed in one piece, **characterized in that** the post (3) has a bevel (22), which is located only on the angled side of the post (3), the formerly maximum radial extension of the post with respect to the axis (4) of the implant body (2) being reduced by the bevel, so that the yaw implant (1) needs a smaller radius for screwing it into the yaw.

2. Jaw implant according to claim 1, **characterized in that** the thread (10) is a self-cutting expansive thread.

3. Jaw implant according to one of the preceding claims, **characterized in that** the post (3) has a gingival circumferential step (20).

4. Jaw implant according to one of the preceding claims, **characterized in that** the pitch of the thread is between 0.6 and 2 mm.

5. Jaw implant according to one of the preceding claims, **characterized in that** the surface of the jaw implant (1) is structured and/or coated with a coating of titanium plasma and/or a completely absorbable bioactive layer or is coated by another material und/or roughened by means of sand blasting and/or acid etching.

6. Jaw implant according to one of the preceding claims, **characterized in that** the implant body (2) preferably has axial cutting grooves in the course of the thread (10).

7. Jaw implant according to one of the preceding claims, **characterized in that** the axial cutting grooves are offset from each other.

8. Jaw implant according to one of the preceding claims, **characterized in that** the outer diameter of the thread (10) remains constant from cervical to apical.

9. Jaw implant according to one of the preceding claims, **characterized in that** the outer diameter of the thread (10) is reduced by about 1-3 mm in the last 2-3 apical turns.

10. Jaw implant according to one of the preceding claims, **characterized in that** the core of the thread (10) is formed conical.

11. Jaw implant according to one of the preceding claims, **characterized in that** the depth of the thread decreases to zero from apical to cervical.

12. Jaw implant according to one of the preceding claims, **characterized in that** the post (3) has an opening (25) for fitting a rotary tool.

13. Jaw implant according to one of the preceding claims, **characterized in that** the longitudinal axis of the opening coincides with the one of the implant body (2).

14. Jaw implant according to one of the preceding claims, **characterized in that** the opening is conical and/or is formed polygonal in cross section.

15. Jaw implant according to one of the preceding claims, **characterized in that** at least one further fitting or insertion device for a rotary tool is mounted on the outer profile of the post.

16. Jaw implant according to one of the preceding claims, **characterized in that** the end of the thread apically has a rounded tip.

17. Jaw implant according to one of the preceding claims, **characterized in that** a gingival circumferential step (20") is provided with variable width and height and/or angling, the course of the gingival circumferential step preferably being asymmetrical.

18. Jaw implant according to claim 17, **characterized in that** the gingival circumferential step is disposed in the area between the basis of the post and the implant body.

19. Jaw implant according to one of the preceding claims, **characterized in that** the gingival circumferential step has an essentially flat or curved upper surface and a conically tapering lower surface.

20. Jaw implant according to one of the preceding claims, **characterized in that** the gingival circumferential step is disposed with its higher, i.e. from the tip of the implant farther distanced side on the interior or exterior side of the bend of the post.

21. Insertion tool for a jaw implant, **characterized in that** the insertion tool is formed in such a way that it can be fitted onto an angled post (3) of a jaw implant (1) according to one of the preceding claims for rotating the jaw implant, in particular for screwing it in, wherein in a condition, where the tool (33) is fitted on the angled post (3) of the jaw implant (1), the axis (44) of the insertion tool (33) overlapping the post (3) is identical with an axis (4*) of the implant body (2), the insertion tool having an extension (34) for receiving the post (3) in its opening, which is adapted to the post.

## Revendications

1. Implant dentaire (1) comportant un corps (2) de l'implant avec un filetage (10) pour le vissage dans une mâchoire, et un pilier (3) pour le maintien de la prothèse dentaire, l'axe longitudinal (6) du pilier (3) étant disposé en angle par rapport à l'axe longitudinal (4) du corps (2) de l'implant et ledit corps (2) de l'implant et ledit pilier (3) étant réalisés d'un seul tenant, **caractérisé en ce que** le pilier (3) comporte un chanfrein (22) qui est réalisé uniquement sur le côté plié du pilier (3), sachant que par la présence du chanfrein (22), la dimension radiale du pilier (3), précédemment la plus grande par rapport à l'axe (4) du corps (2) de l'implant, est diminuée, de telle sorte que l'implant dentaire (1) nécessite un plus petit rayon pour le vissage dans la mâchoire.

2. Implant dentaire selon la revendication 1,
**caractérisé en ce que** le filetage (10) est un filetage expansif auto-taraudant.

3. Implant dentaire selon l'une quelconque des revendications précédentes, **caractérisé en ce que** le pilier (3) comporte un épaulement périphérique (20) gingival.

4. Implant dentaire selon l'une quelconque des revendications précédentes, **caractérisé en ce que** la distance entre les spires du filetage se situe entre 0,6 et 2 mm.

5. Implant dentaire selon l'une quelconque des revendications précédentes, **caractérisé en ce que** la surface de l'implant dentaire (1) est structurée et/ou recouverte d'un revêtement de titane déposé par plasma et/ou d'une couche bioactive pouvant être résorbée totalement ou est revêtue d'un autre matériau et/ou est sablée et/ou est rendue rugueuse par une gravure à l'acide.

6. Implant dentaire selon l'une quelconque des revendications précédentes, **caractérisé en ce que** le corps (2) de l'implant comporte de préférence des encoches axiales découpées dans le tracé du filetage (10).

7. Implant dentaire selon l'une quelconque des revendications précédentes, **caractérisé en ce que** les encoches axiales découpées sont décalées les unes par rapport aux autres.

8. Implant dentaire selon l'une quelconque des revendications précédentes, **caractérisé en ce que** le diamètre extérieur du filetage (10) reste constant de cervical en apical.

9. Implant dentaire selon la revendication 8, **caractérisé en ce que** le diamètre extérieur du filetage (10) est diminué de 1 à 3 mm environ dans les deux à trois dernières spires apicales.

10. Implant dentaire selon l'une quelconque des revendications précédentes, **caractérisé en ce que** le noyau du filetage (10) est conique.

11. Implant dentaire selon l'une quelconque des revendications précédentes, **caractérisé en ce que** la profondeur du filetage diminue jusqu'à zéro d'apical en cervical.

12. Implant dentaire selon l'une quelconque des revendications précédentes, **caractérisé en ce que** le pilier (3) comporte une ouverture (25) pour poser un outil rotatif.

13. Implant dentaire selon l'une quelconque des revendications précédentes, **caractérisé en ce que** l'axe longitudinal de l'ouverture coïncide avec celui du corps (2) de l'implant.

14. Implant dentaire selon l'une quelconque des revendications précédentes, **caractérisé en ce que** l'ouverture est conique et/ou est réalisée avec une section polygonale.

15. Implant dentaire selon l'une quelconque des revendications précédentes, **caractérisé en ce qu'**au moins un dispositif de pose ou d'insertion supplémentaire pour un outil rotatif est disposé sur le profil extérieur du pilier.

16. Implant dentaire selon l'une quelconque des revendications précédentes, **caractérisé en ce que** l'extrémité du filetage comporte en apical une pointe arrondie.

17. Implant dentaire selon l'une quelconque des revendications précédentes, **caractérisé en ce qu'**il est prévu un épaulement périphérique (20") gingival avec différentes largeur et hauteur et/ou angle, le tracé de l'épaulement périphérique gingival étant de préférence asymétrique.

18. Implant dentaire selon la revendication 17, **caractérisé en ce que** l'épaulement périphérique gingival est disposé dans la zone entre la base du pilier et le corps de l'implant.

19. Implant dentaire selon l'une quelconque des revendications précédentes, **caractérisé en ce que** l'épaulement périphérique gingival comporte une face supérieure sensiblement plane ou incurvée et une face inférieure se rétrécissant sous forme conique.

20. Implant dentaire selon l'une quelconque des revendications précédentes, **caractérisé en ce que** l'épaulement périphérique gingival est disposé avec son côté plus haut, c'est-à-dire davantage éloigné de la pointe de l'implant, sur le côté de l'angle intérieur ou le côté de l'angle extérieur du pilier.

21. Clé d'introduction pour un implant dentaire, **caractérisée en ce que** la clé d'introduction est configurée de telle sorte qu'elle peut être posée en vue de tourner, en particulier visser, l'implant dentaire sur un pilier (3) incliné d'un implant dentaire (1) selon l'une quelconque des revendications précédentes, sachant que l'axe (44) de la clé d'introduction (23) s'engageant au-dessus du pilier (3) est identique à un axe (4*) du corps (2) de l'implant lorsque la clé (33) est en position posée sur le pilier (3) incliné de l'implant dentaire (1), la clé d'introduction comportant une saillie (34) destinée à recevoir le pilier (3) dans son ouverture qui est adaptée au pilier.
